# FASCICULE DE BREVET EUROPEEN

(11) **EP 3 109 587 B1**
(45) Date de publication et mention de la délivrance du brevet: **21.08.2019**
(21) Numéro de dépôt: 16174762.1
(22) Date de dépôt: 16.06.2016
(51) Int. Cl.: G01B 3/36, G01B 3/34

(54) **ENSEMBLE COMPORTANT UNE FIXATION ET UNE BAGUE DE CONTRÔLE**
SYSTEM BEINHALTEND EINE BEFESTIGUNG UND EINEN KONTROLLRING
SYSTEM COMPRISING A FIXATION AND A CONTROL RING

(30) Priorité: 23.06.2015 FR 1555772
(43) Date de publication de la demande: 28.12.2016
(73) Titulaire: Lisi Aerospace, 75012 Paris (FR)
(72) Inventeur: BERTHOU, Alexandre, 92270 BOIS-COLOMBES (FR); BROUCKE, Martial, 60240 DELINCOURT (FR); PAYARD, Christophe, 92500 RUEIL-MALMAISON (FR)
(74) Mandataire: Ipside

(56) Documents cités:
- CN-U- 201 607 184
- CN-U- 201 680 787
- FR-A1- 3 013 781
- US-A- 5 979 071
- US-A1- 2009 307 919

## Description

La présente invention se rapporte à un calibre de contrôle destiné à contrôler en sortie de ligne de fabrication que des caractéristiques dimensionnelles d'une fixation sont conformes au plan de conception de la fixation. Plus particulièrement, l'invention concerne une bague de contrôle pour une fixation du type comprenant une tête élargie et un fût cylindrique s'étendant suivant un axe, le fût comportant au moins une bande de revêtement parallèle à l'axe. Une telle fixation est décrite dans la demande FR 3 008 754 et représentée sur les figures 1A et 1B. Ce type de fixation est utilisé pour assembler des structures métalliques et composites d'avions.

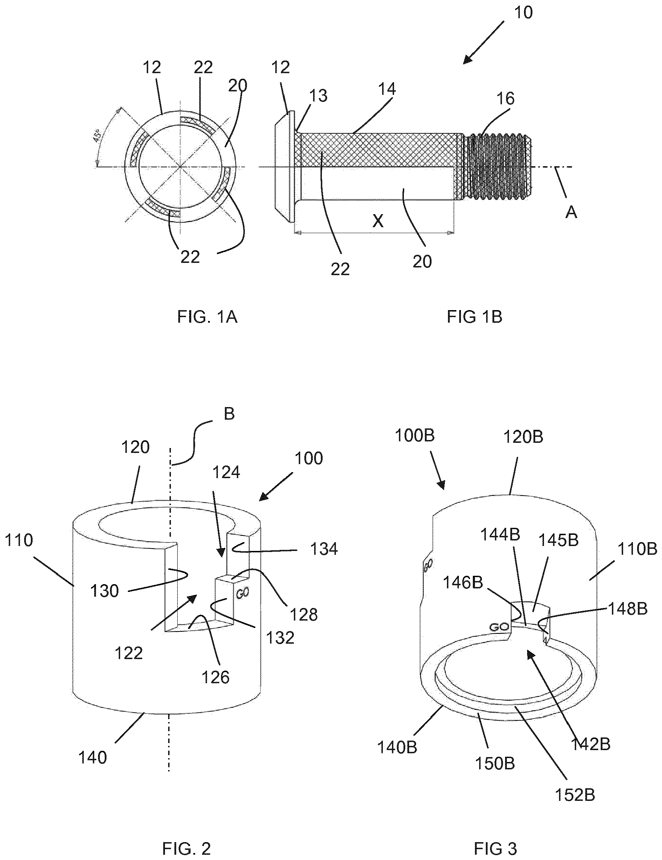

Les figures 1A et 1B représentent une fixation métallique 10 du type précité vue respectivement en bout et de côté, comprenant une tête 12 protubérante, un fût 14 cylindrique et une portion filetée 16. En variante, la fixation peut comprendre une queue de traction permettant de tirer sur la fixation pour l'insérer en interférence dans une structure préalablement alésée. Cette queue peut-être une partie intégrale de la fixation 10, ou amovible au moyen d'une extrémité filetée insérée dans une extrémité taraudée réalisée à l'intérieur de la portion filetée 16. En variante, la portion filetée peut être remplacée par des gorges annulaires de sertissage. En variante, la tête 12 peut être fraisée.

Le fût 14, destiné à venir en contact serré dans un alésage réalisé dans un ensemble de structures comprenant un ou plusieurs matériaux, métalliques et/ou composites, comprend quatre portions conductrices 20, c'est-à-dire qui ne comprennent aucun revêtement ou peinture empêchant le passage d'un courant électrique entre la portion conductrice du fût et la paroi de l'alésage. Le fût comprend également quatre bandes 22 lubrifiantes, disposées parallèlement à l'axe de révolution A de la fixation. Chaque bande 22 lubrifiante s'étend sur le fût 14 et sur une portion sous la tête 12, sur une distance X. Les portions conductrices 20 et lubrifiantes 22 sont disposées alternativement autour de la circonférence du fût, comme représenté en figure 1A. Ainsi, la conduction électrique est assurée sur toute l'épaisseur de structure assemblée, quelle que soit la composition de la structure dans laquelle la fixation est insérée. Les portions lubrifiantes 22 permettent d'assurer une lubrification du fût 14 sur toute sa hauteur de sorte que la fixation peut être installée en interférence sans gripper ou sans casser.

Le lubrifiant utilisé peut être un film solide de type MoS₂, ou une résine organique à pigments d'aluminium, comme le revêtement HI-KOTE™ 1 ou HI-KOTE™ 1NC commercialisé par Hi-Shear Corp. à Torrance, Californie, tous deux diélectriques. Le lubrifiant est déposé sur une épaisseur de 5 à 13 µm, par exemple par pulvérisation, sur une longueur axiale et sur une largeur données au plan de conception de la fixation 10.

Le document FR 3013781A1 décrit également une fixation recouverte de bandes lubrifiantes.

Quel que soit la méthode de fabrication d'une fixation 10 et du moyen de dépôt des bandes 22 lubrifiantes, les caractéristiques dimensionnelles de ces bandes - notamment les longueurs et largeurs - doivent être mesurées et comparées à celle du plan de conception de la fixation afin d'en assurer la conformité.

On connaît différents moyens de mesure dimensionnelle qui permettent de contrôler les dimensions des bandes 22, qui sont spécifiées sur le plan de conception de la fixation.

Un premier moyen est un moyen tri-dimensionnel, qui permet de contrôler les dimensions par palpation de la fixation. Un second moyen connu est un moyen informatique comprenant une caméra qui filme les fixations et analyse les images par rapport à une image référence.

Ces moyens sont fiables mais chers à l'achat et à la maintenance, encombrants, fragiles et nécessitent un personnel spécialement formé.

Il est également connu dans le contrôle dimensionnel de mettre en oeuvre des cales calibrées qui donne une information dimensionnelle d'un espace dont l'ouverture est comprise entre l'épaisseur de la plus grande cale qui rentre dans l'ouverture et l'épaisseur de la plus petite cale qui ne rentre pas. Le document US 5979071A décrit un exemple d'outillage intégrant un jeu de cales d'épaisseur pour donner une mesure de l'ouverture d'un segment de piston. Un tel dispositif intrusif puisqu'il introduit une cale dans le produit testé est incapable de répondre au besoin de vérifier la largeur ou la longueur d'une bande déposée sur un fût cylindrique de fixation.

Une variante en « négatif » de ce dernier dispositif est décrit dans le document US 2009/307919A1. Dans ce cas l'épaisseur d'un élément est vérifiée en plaçant ledit élément dans des logements de différentes profondeurs et l'épaisseur est alors comprise entre la profondeur la plus faible du logement dans lequel l'élément rentre et la profondeur la plus grande du logement dans lequel l'élément ne rentre pas. Ici encore le dispositif ne permet pas de vérifier les largeur et longueur des bandes sur le fût cylindrique.

Il est également connu du document CN 201680787U de mettre en oeuvre un calibre pour vérifier le diamètre d'extrémité d'un cône fileté de tube de forage. Pour cela le calibre comporte une ouverture lisse en tronc de cône et une face étagée qui détermine les limites acceptable de l'enfoncement du cône fileté dans l'ouverture du calibre. Si cette solution permet de réaliser un contrôle visuel du type « go/no go » elle est basée sur une conformité géométrique tridimensionnelle d'une forme conique et ne permet pas d'apporter une solution au contrôle de la dimension de bandes déposées sur un fût cylindrique d'une fixation.

Il est également connu du document CN201607184U de mettre en oeuvre un calibre pour vérifier la longueur de la partie saillante d'une pièce de fixation. Pour cela, le calibre comprend un plan glissant de positionnement, un trou débouchant, et deux marches qui détermine les limites tolérées de la longueur de la partie saillante. Cette solution ne permet pas de réaliser un contrôle visuel de la largeur de bandes déposées sur un fût cylindrique.

Un objectif de la présente demande est de fournir un moyen de contrôle dimensionnel des longueurs et largeurs des bandes lubrifiantes des fixations de l'art antérieur qui soit facile à fabriquer, simple et rapide à utiliser, qui s'use peu et qui soit fiable.

L'invention a donc pour objet un ensemble tel que revendiqué dans la revendication indépendante 1.

Il est ainsi obtenu un dispositif simple de contrôle dimensionnel de caractéristiques d'une fixation. Un tel dispositif s'avère d'une part peu coûteux à fabriquer, par usinage ou moulage dans tout type de matériau, est peu soumis à une usure en utilisation, pratiquement indéréglable et sans besoin de calibration périodique, et peut être porté et mis en oeuvre par tout opérateur devant réaliser un contrôle avant la pose d'une fixation.

Le choix d'un matériau de faible dureté par rapport au matériau des fixations limite également le risque de produire un dommage, par exemple une rayure, sur la fixation.

La bague de contrôle selon l'invention peut comprendre une ou plusieurs des caractéristiques suivantes en considération de toutes les combinaisons techniquement possibles.

Dans une forme de réalisation, les deux segments d'arc adjacents sont des encoches s'étendant axialement dans le corps tubulaire jusqu'aux parois d'extrémité, situées entre la première extrémité et la deuxième extrémité.

Dans une autre forme de réalisation, les deux segments d'arc adjacents sont des saillies s'étendant axialement hors du corps tubulaire jusqu'aux parois d'extrémité, au-delà de la première extrémité.

Le choix de l'une ou l'autre de ces formes de réalisation, qui peuvent être combinées sur une même bague, est en particulier dicté par des conditions d'utilisation, par exemple des conditions d'éclairement et ou de contraste de la lecture, voire par une préférence de confort d'un utilisateur.

Dans une forme de réalisation, au moins une portion d'une paroi latérale d'une encoche ou d'une saillie s'étend dans un plan décalé d'un plan radial du corps avec un angle (α). Il en résulte une lecture optique facilitée compte tenu de l'épaisseur possible du corps de la bague.

Dans une forme de réalisation, la deuxième extrémité de la bague présente au moins une encoche s'étendant axialement sur une portion du corps depuis ladite deuxième extrémité jusqu'à une première paroi d'extrémité, une longueur axiale de l'encoche étant définie par une distance minimale à contrôler entre ladite deuxième extrémité et une extrémité axiale de bande disposée sur le fût de la fixation.

Dans une forme de réalisation, la deuxième extrémité présente également au moins une deuxième encoche s'étendant axialement sur une portion du corps depuis ladite deuxième extrémité jusqu'à une deuxième paroi de fond, une longueur axiale de ladite deuxième encoche étant définie par une plage de tolérance d'une distance à contrôler entre ladite deuxième extrémité et une extrémité axiale de bande disposée sur le fût de la fixation.

Il est ainsi obtenu sur des contrôles de longueur ou de position d'extrémité de bandes les mêmes avantages que pour le contrôle des largeurs de bandes.

Dans une forme de réalisation, pour s'adapter à la forme de la tête de la fixation, la deuxième extrémité comprend une surface conique ou plane, complémentaire d'un dessous de tête de fixation respectivement fraisée ou protubérante.

Dans une forme de réalisation, la deuxième extrémité comprend une surface conique et une surface plane complémentaires alternativement d'un dessous de tête de fixation fraisée ou protubérante.

Pour faciliter l'interprétation des contrôles réalisés et limiter les risques de mauvaises lectures, au moins une paroi d'extrémité ou latérale comprend un moyen visuel indiquant l'acceptation ou le rejet de la dimension vérifiée.

Le moyen visuel est par exemple une couleur appliquée sur ladite paroi ou une mention appliquée auprès de ladite paroi.

L'invention concerne également une méthode de contrôle telle que revendiquée dans la revendication indépendante 10.

Il est ainsi vérifié la conformité d'une largeur d'une bande sur le fût de la fixation.

Dans un mode de mise en oeuvre, les étapes b) et c) réalisée pour une bande sont répétées pour chacune des bandes de revêtement de la fixation, et la fixation est déclarée non conforme si l'étape c) n'est pas vérifiée pour au moins une bande de revêtement.

Il est ainsi réaliser le contrôle complet d'une fixation par une simple rotation de la fixation par rapport à la bague.

L'invention concerne également une méthode de contrôle telle que revendiquée dans la revendication indépendante 12.

Il est ainsi vérifié la conformité d'une longueur des bandes sur le fût de la fixation.

Dans un mode de mise en oeuvre, la méthode comprend en outre une étape consistant à déclarer la fixation conforme suivant un critère de longueur minimale des bandes si l'extrémité axiale de chaque bande apparaît en regard de la deuxième encoche.

Dans un mode de mise en oeuvre la deuxième extrémité de la bague est placée en butée sous une tête de la fixation. Il est ainsi limité le risque d'un défaut de positionnement de la bague sur le fût de la fixation lors d'un contrôle de longueur de bande.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- figure 1A : une vue en bout d'une fixation de l'art antérieur à contrôler, déjà décrite ;
- figure 1B : une vue de côté d'une fixation de l'art antérieur à contrôler, déjà décrite ;
- figure 2 : une vue isométrique d'un premier mode de réalisation d'une bague de contrôle ;
- figure 3 : une vue isométrique d'un deuxième mode de réalisation d'une bague de contrôle ;
- figure 4 : une vue isométrique d'un troisième mode de réalisation d'une bague de contrôle ;
- figure 5 : une vue isométrique d'un quatrième mode de réalisation d'une bague de contrôle ;
- figure 6 : une vue en bout de la bague de la figure 2 disposée sur le fût d'une fixation à contrôler,
- figure 7 : une autre vue en bout de la bague de la figure 2 disposée sur le fût d'une fixation à contrôler, le fût ayant tourné de 90° dans le sens anti-horaire par rapport à la figure 6.

La figure 2 représente un premier mode de réalisation de bague de contrôle 100 selon l'invention. La bague de contrôle 100 comprend un corps tubulaire 110 d'axe de révolution B, pourvu d'un perçage traversant, débouchant sur une première extrémité 120 dudit corps tubulaire et une deuxième extrémité 140 opposée à la première extrémité. La bague est par exemple réalisée en aluminium. Le diamètre intérieur de la bague correspond au diamètre extérieur du fût 14 de la fixation à contrôler, à un jeu près afin que la bague puisse coulisser sans résistance excessive sur le fût 14.

La première extrémité 120 du corps comprend deux encoches 122 et 124 en forme de U, s'étendant axialement sur une portion du corps 110 depuis l'extrémité 120 vers respectivement, une paroi d'extrémité 126 et une paroi d'extrémité 128. Les parois d'extrémité 126 et 128 s'étendent dans des plans parallèles, perpendiculaires à l'axe B, et sont décalées axialement l'une de l'autre. Les deux encoches 122 et 124 sont adjacentes et présentent des longueurs axiales différentes, et des largeurs - ou segments d'arc - de longueurs différentes.

Les termes « largeur » et « segments d'arc » seront utilisés de manière interchangeable dans le reste de la description et désignent la longueur du segment d'arc couvert par la bande 22 lubrifiante.

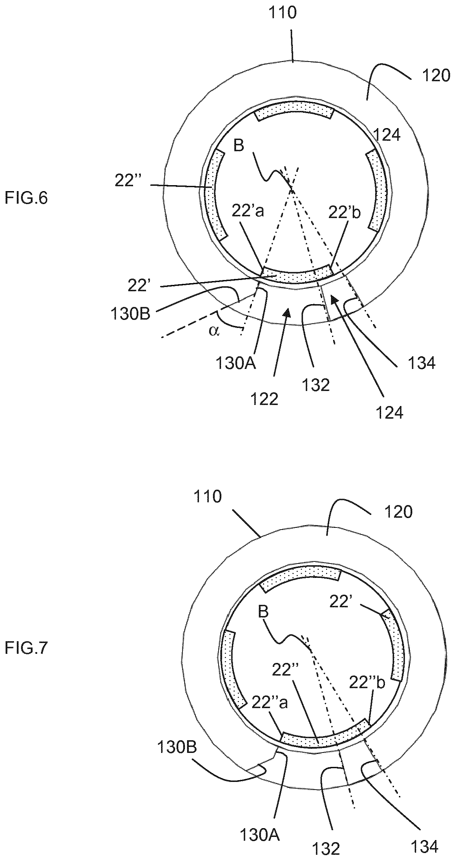

L'encoche 122 comprend deux parois latérales 130 et 132 et la paroi d'extrémité 126. La paroi 132 est disposée dans un plan radial, c'est-à-dire un plan s'étendant parallèlement à un rayon de la bague et passant par l'axe de révolution B de la bague. La paroi 130 comprend une portion 130A (fig. 6, 7) s'étendant dans un plan radial, et une portion 130B biseautée, s'étendant dans un plan décalé du plan radial d'un angle α (fig. 6, 7). Le biseau permet de faciliter le contrôle visuel. En variante non représentée, toute la paroi 130 pourrait être biseautée. La largeur de l'encoche 122 entre les parois latérales 130 et 132 correspond à la largeur minimale autorisée d'une bande 22. La largeur des deux encoches 122 et 124, entre les parois latérales 130 et 134, correspond à la largeur maximale autorisée d'une bande 22. La largeur de la paroi 128, entre les parois latérales 132 et 134, représente la plage de tolérance acceptée au plan de conception de la fixation 10 de la largeur de la bande 22.

La différence de longueur axiale des encoches 122 et 124 ne sert pas à mesurer une dimension axiale de bande 22, mais permet de différencier visuellement les deux largeurs minimales et maximales représentées par les parois latérales des encoches.

Pour faciliter l'utilisation de la bague, le mot « GO » est inscrit sur le corps 110 sous la paroi d'extrémité 128, indiquant visuellement la plage de tolérance acceptable de la largeur de bande mesurée. En variante, la paroi d'extrémité 128 pourrait comprendre une couleur, par exemple une couleur verte, indiquant visuellement la plage dimensionnelle acceptable.

La deuxième extrémité 140 comprend dans ce mode de réalisation une surface plane sans encoche.

La figure 3 représente une bague 100B selon un deuxième mode de réalisation de l'invention. La bague 100B comprend un corps 110B et une première extrémité 120B, identique à la première extrémité 120 du premier mode de réalisation représenté en figure 2.

Dans l'exemple de la figure 3, la deuxième extrémité 140B de la bague 100B comprend une encoche 142B en forme de U, s'étendant axialement sur une portion du corps 110B depuis l'extrémité 140B vers une paroi d'extrémité 144B s'étendant dans un plan perpendiculaire à l'axe B de la bague 100B. L'encoche 142B comprend deux parois latérales 146B et 148B, et la paroi d'extrémité 144B. Les parois latérales 146B et 148B sont disposées chacune dans un plan radial. Une partie 145B du corps 110B est biseautée pour faciliter le contrôle visuel.

L'encoche 142B n'est nécessaire que lorsque la bande 22 ne s'étend pas jusqu'au rayon sous-tête 13 de la fixation, mais s'arrête à une distance précise du rayon sous-tête. Pour ce cas précis, l'encoche 142B s'étend axialement sur une distance correspondant à la distance minimale indiquée au plan de conception de la fixation entre le dessous de tête et l'extrémité axiale de la bande 22. La largeur de l'encoche 142B doit être suffisante pour permettre le contrôle visuel, mais n'est pas utilisée pour mesurer la largeur correcte de la bande de revêtement.

La deuxième extrémité 140B comprend une surface plane 150B, destinée à venir en contact avec le dessous de tête d'une fixation à tête protubérante. La paroi intérieure de l'extrémité 140B comprend un épaulement 152B, conçu pour recevoir le rayon sous-tête 13 d'une fixation à tête protubérante.

Pour faciliter l'utilisation de la bague, le mot « GO » est inscrit sur le corps 110B près de la paroi latérale 146B à proximité de la deuxième extrémité 140B, indiquant visuellement la plage dimensionnelle acceptable de la longueur mesurée. En variante, la paroi latérale 146B pourrait comprendre une couleur, par exemple une couleur verte, indiquant visuellement la plage dimensionnelle acceptable de la longueur mesurée.

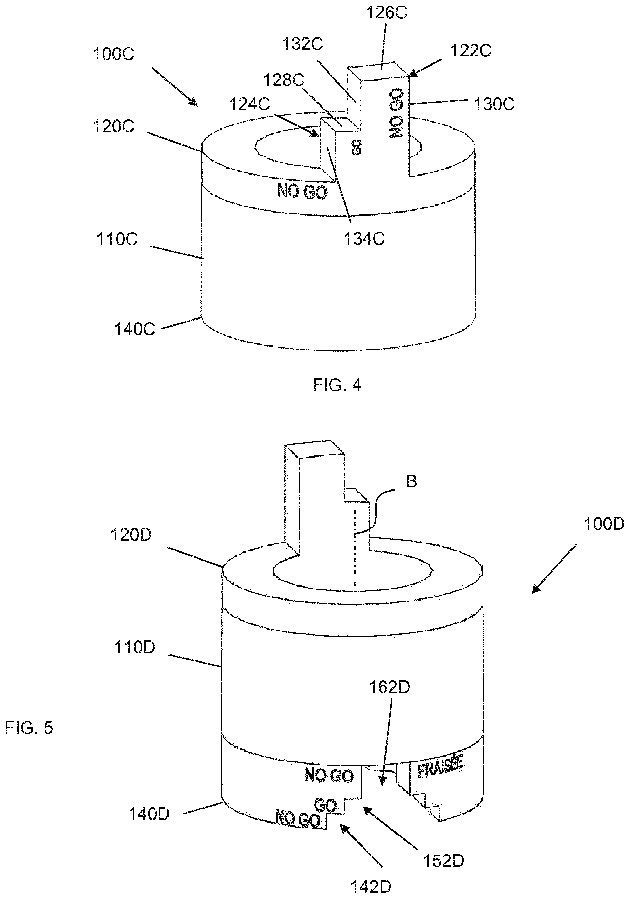

La figure 4 représente une bague 100C selon un troisième mode de réalisation de l'invention. La bague 100C comprend un corps 110C, une première extrémité 120C et une deuxième extrémité 140C. Contrairement à la bague représentée en figure 2, la première extrémité 120C de ce mode de réalisation ne comprend pas d'encoche en forme de U, mais deux saillies 122C et 124C en forme de U, également adjacentes, s'étendant axialement au-delà de l'extrémité 120C jusqu'à respectivement une paroi d'extrémité 126C et une paroi d'extrémité 128C.

La saillie 122C comprend deux parois latérales 130C et 132C, et la paroi d'extrémité 126C. La paroi 132C est disposée dans un plan radial. La largeur de la saillie 122C entre les parois latérales 130C et 132C correspond à la largeur minimale autorisée d'une bande 22. La largeur des deux saillies 122C et 124C, entre les parois latérales 130C et 134C correspond à la largeur maximale autorisée d'une bande 22. La largeur entre les parois latérales 132C et 134C représente la tolérance acceptée au plan de conception de la fixation 10.

La différence de longueur des saillies 122C et 124C dans la direction axiale ne sert pas à mesurer une dimension axiale de bande 22, mais permet de différencier visuellement les deux largeurs minimales et maximales représentées par les parois latérales des saillies.

Pour faciliter l'utilisation de la bague, le mot « GO » est inscrit sur le corps 110C de la bague sous la paroi d'extrémité 128C, indiquant visuellement la plage dimensionnelle acceptable de la largeur mesurée. En variante, la paroi d'extrémité 128C pourrait comprendre une couleur, par exemple une couleur verte.

Les mentions « NO GO » indiquant le rejet de la fixation sont inscrites auprès de la paroi latérale 130C et sous l'extrémité 120C, près de la paroi 134C, indiquant visuellement la plage dimensionnelle non acceptable de la largeur mesurée. En variante, la surface plane de l'extrémité 120C et la paroi latérale 130C pourraient comprendre une couleur, par exemple une couleur rouge, indiquant visuellement la plage dimensionnelle non acceptable de la largeur mesurée. Ces indications sont facultatives, et le calibre peut ne comprendre qu'une indication « GO » ou qu'une couleur verte, ou qu'une indication « NO GO » ou qu'une couleur rouge.

La deuxième extrémité 140C de la bague 110C comprend une surface plane sans encoche. En variante non représentée, elle peut comprendre une encoche 142B comme représentée en figure 3, ou une série d'encoches 142D, 152D et 162D représentées en figure 5 et décrite ci-après.

La figure 5 représente une bague 100D selon un quatrième mode de réalisation de l'invention. La bague 100D comprend un corps 110D et une première extrémité 120D identique à la première extrémité 120C de la bague 100C, représentée en figure 4. En variante, elle peut être identique à la première extrémité 120C de la bague 100C.

Dans l'exemple de la figure 5, la deuxième extrémité 140D de la bague 100D comprend une série de trois encoches 142D, 152D, 162D successives en forme de U, s'étendant axialement sur une portion du corps 110D depuis l'extrémité 140D vers respectivement trois parois d'extrémité s'étendant dans des plans perpendiculaire à l'axe B, et décalés axialement les unes des autres. Les trois encoches 142D, 152D et 162D sont symétriques par rapport à un plan radial passant en leur milieu, les plans radiaux milieux des trois encoches étant confondus.

Chaque encoche comprend deux parois latérales et une paroi d'extrémité. Les parois latérales sont disposées chacune dans un plan radial. Les largeurs des encoches sont de plus en plus grandes au fur et à mesure que les parois d'extrémité sont proches de l'extrémité 140D. L'utilisation d'encoches successives et adjacentes de largeurs différentes permet de marquer physiquement la plage de tolérance en décalant dans la direction radiale les parois latérales de chaque encoche.

La longueur axiale de la première encoche 142D représente la distance minimale qui doit séparer le rayon sous-tête 13 d'une fixation de l'extrémité axiale d'une bande 22. Cette encoche est équivalente à l'encoche 142B de la bague 100B.

La longueur axiale de la deuxième encoche 152D et la longueur axiale de la première encoche 142D représente ainsi la plage de tolérance de la distance entre le rayon sous-tête 13 d'une fixation et l'extrémité axiale d'une bande 22.

La troisième encoche 162D s'étend axialement au-delà d'une distance supérieure à la distance maximale indiquée au plan de conception de la fixation, entre le dessous de tête 13 et l'extrémité axiale de la bande 22.

Les largeurs des encoches 142D, 152D et 162D doivent être suffisante pour permettre le contrôle visuel, mais ne sont pas utilisées pour mesurer la largeur d'une bande lubrifiante, afin d'éviter les erreurs de contrôle.

Pour faciliter l'utilisation de la bague, le mot « GO » est inscrit sur le corps 110D près de la paroi latérale de la deuxième encoche 152D, indiquant visuellement la plage de tolérance acceptable de la longueur de bande mesurée. En variante, la paroi latérale de la deuxième encoche pourrait comprendre une couleur verte.

La bague peut comprendre d'autres indications visuelles, comme le mot « FRAISEE » pour indiquer que la bague est adaptée à une fixation à tête fraisée, une indication « NO GO » auprès des parois latérales des encoches 142D et 162D pour indiquer qu'une bande dont l'extrémité axiale apparait dans ces plages est hors tolérance. En variante, l'indication « NO GO » peut être remplacée par une application de couleur rouge sur les parois latérales de ces encoches.

La méthode de mesure des dimensions d'une bande de revêtement 22 sur un fût d'une fixation 10 au moyen d'une bague 100, 100B ou 100C ou 100D va maintenant être décrite en relation avec les figures 6 et 7.

Les figures 6 et 7 représentent la mesure d'une largeur d'une bande de revêtement 22 d'une fixation 10 au moyen d'une bague 100, représentée en figure 2. La bague 100 est représentée en vue de dessus, et le fût de la fixation est représentée en section. Les bandes 22 lubrifiantes sont figurées schématiquement et sont grossies exagérément.

La méthode comprend les étapes suivantes, qui peuvent être réalisées dans un ordre différent, puisque la non-conformité d'une dimension entraîne la non-conformité de la fixation.

La première étape consiste à monter avec jeu la bague 100 sur le fût cylindrique 14 d'une fixation à contrôler.

L'opérateur fait ensuite tourner la bague sur toute la circonférence du fût de sorte qu'une bande 22' à contrôler apparaisse dans les deux encoches 122 et 124. Pour cela, il aligne la paroi 130A de l'encoche 122 avec une extrémité 22'a de la bande.

Dans le cas de la bande 22', la deuxième extrémité 22'b de la bande apparait entre la paroi 132 de l'encoche 122 et la paroi 134 de la deuxième encoche 124. La largeur de la bande 22' se situe donc dans la plage de tolérance telle que définie par la largeur de la paroi d'extrémité128, puisqu'elle est à la fois plus large que la largeur minimale exigée, et moins large que la largeur maximale autorisée.

La largeur de la bande 22' étant conforme, l'opérateur fait tourner la bague 100 sur le fût 14 de la fixation pour contrôler la bande de revêtement adjacente 22". Cette position est représentée en figure 7.

Comme précédemment, l'opérateur aligne la paroi 130A de l'encoche 122 avec une extrémité 22"a de la bande.

Dans le cas de la bande 22", la deuxième extrémité 22"b de la bande n'apparait pas entre la paroi 132 de l'encoche 122 et la paroi 134 de la deuxième encoche 124. La largeur de la bande 22' se situe hors de la plage de tolérance définie par la largeur de la paroi d'extrémité128, puisqu'elle est plus large que la largeur maximale autorisée. Elle n'est donc pas conforme au plan de conception, et la fixation 14 est contrôlée comme non conforme.

Si la deuxième extrémité 22"b de la bande 22" se terminait dans la largeur de l'encoche 122, avant la paroi 132, alors elle serait également jugée non conforme puisque plus petite que la largeur minimale autorisée. La fixation 14 serait donc également jugée non conforme.

Si toutes les bandes 22 sont jugées conformes, la fixation 14 contrôlée est aussi jugée conforme au plan de conception.

L'utilisation du calibre 100C pour mesurer la conformité des largeurs de bandes 22 est similaire à celle décrite précédemment, à la différence près que l'opérateur doit aligner l'extrémité 22'b ou 22"b d'une bande avec la paroi 130C de la saillie 122C, et vérifier si l'extrémité 22'a ou 22"a de la bande apparaît dans la largeur de la paroi 128C de la deuxième saillie 124C. Si l'extrémité 22'a ou 22"a n'apparaît pas, soit parce la bande est trop étroite soit parce qu'elle est trop large, la bande n'est pas conforme et la fixation est jugée non conforme.

Si la fixation 14 comprend des bandes 22 qui ne s'étendent pas sur toute la longueur du fût 14 mais s'étendent sur une portion seulement du fût, à distance du rayon sous-tête 13 de la fixation 10, la bague 100B ou 100D est nécessaire. Pour cela, l'opérateur monte par exemple la bague 100B sur le fût 14 cylindrique de la fixation, et fait coulisser la bague jusqu'à ce que la deuxième extrémité 140B du corps arrive en butée sous la tête de la fixation. Si la fixation 10 est à tête protubérante, la deuxième extrémité 140B nécessite une portion plane afin de se plaquer sous la tête protubérante 12. Si la fixation 10 est à tête fraisée, la deuxième extrémité 140B nécessite une portion conique.

L'opérateur fait ensuite tourner la bague sur toute la circonférence du fût afin de contrôler visuellement si chaque bande 22 apparaît dans l'encoche 142B.

Si une bande 22 n'apparaît pas, alors la fixation est contrôlée comme non conforme : en effet, la bande 22 est trop éloignée du dessous de la tête et sa longueur n'est pas conforme au plan. Si toutes les bandes apparaissent, alors la fixation est contrôlée conforme au plan.

L'encoche 142B ne contrôle que la distance minimale entre un rayon sous tête 13 et une extrémité axiale d'une bande 22. Si le plan de conception de la fixation 10 spécifie que les bandes 22 doivent se trouver à une distance comprise dans une plage de tolérance du rayon sous-tête, alors l'opérateur utilisera la bague 100D représentée en figure 5.

La méthode de contrôle est identique à celle décrite précédemment, à ceci près que l'extrémité axiale d'une bande 22 doit apparaître en regard de la paroi latérale de la deuxième encoche 152D pour être jugée conforme. Si l'extrémité axiale d'une bande 22 apparait en regard de la troisième encoche 162D, alors la bande est trop courte. Si l'extrémité axiale d'une bande 22 apparait en regard de la première encoche 142D, alors la bande est trop longue. Dans ces deux cas, la longueur de bande n'est pas conforme au plan, et la fixation est jugée non conforme.

Avantageusement, une bague comprendra un moyen de contrôle de largeur de bande à la première extrémité, et deux moyens de contrôle de longueur de bande à la deuxième extrémité, l'un adapté à une fixation à tête fraisée, l'autre adapté à une fixation à tête protubérante. Ainsi, une seule bague permet de réaliser rapidement plusieurs contrôles. La bague 100B ou 100D peut être utilisée pour contrôler des fixations sans exigence sur la longueur axiale de bande, en n'utilisant que le moyen de contrôle visuel de largeur de bande.

Une telle bague est simple à fabriquer, peu usable puisque les parois latérales ne subissent pas de frottement, et simple à utiliser grâce aux marquages GO / NO GO ou aux codes couleurs appliqués auprès ou sur les parois de contrôle.

Bien entendu, cette bague peut être utilisée pour mesurer des largeurs et des longueurs de bande de n'importe quel type de revêtement, et pas seulement des bandes lubrifiantes.

## Revendications

1. Ensemble, comportant une fixation (10) et une bague de contrôle (100, 100B, 100C, 100D) pour ladite fixation (10), ladite fixation comprenant une tête (12) élargie et un fût (14) cylindrique s'étendant suivant un axe (A), le fût comportant au moins une bande (22) de revêtement parallèle à l'axe (A), la bande (22) s'étendant sur une largeur circonférentielle du fût (14), la bague comprenant un corps tubulaire cylindrique (110, 110B, 110C, 110D) s'étendant selon un axe de révolution (B) entre une première extrémité (120, 120B, 120C, 120D) et une deuxième extrémité (140, 140B, 140C, 140D), **caractérisé en ce que**
- la première extrémité (120, 120B, 120C, 120D) comprend deux segments d'arc adjacents (122, 124 ; 122C, 124C), chaque segment d'arc présentant une paroi d'extrémité (126, 128 ; 126C, 128C) s'étendant dans un plan perpendiculaire à l'axe de révolution (B) de la bague, les plans des deux parois étant non confondus et décalés axialement de la première extrémité, et
- chaque segment d'arc comprend au moins une paroi latérale (130, 132, 134 ; 130C, 132C, 134C) s'étendant dans un plan radial passant par l'axe de révolution (B) de la bague, et **en ce que**
- une largeur d'un segment d'arc est définie par une largeur minimale autorisée de bande à contrôler, et une largeur cumulée des deux segments d'arc est définie par une largeur maximale autorisée de bande à contrôler.

2. Ensemble selon la revendication 1, dans lequel les deux segments d'arc (122, 124) adjacents sont des encoches s'étendant axialement dans le corps tubulaire jusqu'aux parois (126, 128) d'extrémité, situées entre la première extrémité (120, 120B) et la deuxième extrémité (140, 140B).

3. Ensemble selon la revendication 1, dans lequel les deux segments d'arc adjacents sont des saillies (122C, 124C) s'étendant axialement hors du corps tubulaire jusqu'aux parois (126C, 128C) d'extrémité, au-delà de la première extrémité (120C, 120D).

4. Ensemble selon la revendication 2 ou 3, dans lequel au moins une portion (130B) d'une paroi latérale (130) d'une encoche ou d'une saillie s'étend dans un plan décalé d'un plan radial du corps avec un angle (α).

5. Ensemble selon l'une des revendications 1 à 3, dans lequel la deuxième extrémité (140 ; 140B) de la bague présente au moins une encoche (142B ; 142D) s'étendant axialement sur une portion du corps depuis ladite deuxième extrémité jusqu'à une première paroi d'extrémité(144B), une longueur axiale de l'encoche étant définie par une distance minimale à contrôler entre ladite deuxième extrémité et une extrémité axiale de bande disposée sur le fût de la fixation.

6. Ensemble selon la revendication 5, dans lequel la deuxième extrémité (140D) présente au moins une deuxième encoche (152D) s'étendant axialement sur une portion du corps depuis ladite deuxième extrémité jusqu'à une deuxième paroi de fond, une longueur axiale de ladite deuxième encoche étant définie par une plage de tolérance d'une distance à contrôler entre ladite deuxième extrémité et une extrémité axiale de bande disposée sur le fût de la fixation.

7. Ensemble selon la revendication 5, dans lequel la deuxième extrémité (140 ; 140B) comprend une surface conique ou plane, complémentaire d'un dessous de tête de fixation respectivement fraisée ou protubérante.

8. Ensemble selon l'une des revendications précédentes, dans lequel au moins une paroi d'extrémité ou latérale comprend un moyen visuel indiquant l'acceptation ou le rejet de la dimension vérifiée.

9. Ensemble selon la revendication 8, dans lequel le moyen visuel est une couleur appliquée sur ladite paroi ou une mention appliquée auprès de ladite paroi.

10. Méthode de contrôle d'une fixation d'un ensemble conforme à une des revendications précédentes, la méthode comprenant les étapes suivantes :
a - monter avec jeu la bague (100, 100B, 100C, 100D) sur le fût cylindrique de la fixation,
b - faire tourner la bague sur la circonférence du fût de sorte à aligner un premier bord d'une bande (22) avec une paroi latérale d'un premier segment d'arc de la première extrémité,
c - déclarer la largeur circonférentielle de la bande (22) conforme si un second bord de la bande (22), opposé au premier bord de ladite bande, est compris dans le second segment d'arc et n'est pas compris dans le premier segment d'arc, c'est-à-dire si la largeur de ladite bande est supérieure à la largeur du premier segment d'arc et inférieure à la largeur des deux segments d'arc adjacents.

11. Méthode de contrôle selon la revendication 10, consistant à répéter les étapes b) et c) de la revendication 11 pour chacune des bandes de revêtement de la fixation, et à déclarer la fixation non conforme si l'étape c) n'est pas vérifiée pour au moins une bande (22) de revêtement.

12. Méthode de contrôle d'une fixation d'un ensemble conforme à l'une des revendications 5 à 7 ou à la revendication 9 prise en combinaison avec la revendication 5 ou la revendication 6, la méthode comprenant les étapes suivantes :
e) monter avec jeu la bague (100B, 100D) sur le fût cylindrique de la fixation, f)coulisser la bague de manière à mettre la deuxième extrémité (140B, 140D) en butée sous la tête (12) de la fixation,
g) faire tourner la bague sur toute la circonférence du fût,
h) déclarer la fixation conforme suivant un critère de longueur maximale des bandes si aucune bande n'apparaît dans la première encoche (142B, 142D) lors de la rotation de la bague.

13. Méthode de contrôle d'une fixation d'un ensemble conforme à la revendication 6 selon la revendication 12, comprenant une étape consistant à déclarer la fixation conforme suivant un critère de longueur minimale des bandes si l'extrémité axiale de chaque bande apparaît en regard de la deuxième encoche (152D).

14. Méthode de contrôle selon la revendication 12 ou la revendication 13 dans laquelle la deuxième extrémité (140B, 140D) de la bague est placée en butée sous une tête de la fixation.

## Patentansprüche

1. Baugruppe, eine Befestigung (10) und einen Kontrollring (100, 100B, 100C, 100D) für die Befestigung (10) beinhaltend, wobei die Befestigung einen erweiterten Kopf (12) und einen zylindrischen Schaft (14) umfasst, der sich entlang einer Achse (A) erstreckt, wobei der Schaft mindestens ein Beschichtungsband (22) parallel zur Achse (A) beinhaltet, wobei sich das Band (22) über eine Umfangsbreite des Schaftes (14) erstreckt,
wobei der Ring einen zylindrischen röhrenförmigen Körper (110, 110B, 110C, 110D) umfasst, der sich entlang einer Drehachse (B) zwischen einem ersten Ende (120, 120B, 120C, 120D) und einem zweiten Ende (140, 140B, 140C, 140D) erstreckt, **dadurch gekennzeichnet, dass**
- das erste Ende (120, 120B, 120C, 120D) zwei angrenzende Bogensegmente (122, 124; 122C, 124C) umfasst, wobei jedes Bogensegment eine Endwand (126, 128; 126C, 128C) aufweist, die sich über eine Ebene senkrecht zu der Drehachse (B) des Ringes erstreckt, wobei die Ebenen der beiden Wände nicht zusammenfallen und axial von dem ersten Ende versetzt sind, und
- jedes Bogensegment mindestens eine Seitenwand (130, 132, 134; 130C, 132C, 134C) umfasst, die sich über eine radiale Ebene erstreckt, die durch die Drehachse (B) des Ringes verläuft, und dadurch, dass
- eine Breite eines Bogensegments durch eine zulässige, zu kontrollierende Mindestbandbreite definiert wird, und eine kumulierte Breite der beiden Bogensegmente durch eine zulässige, zu kontrollierende Höchstbandbreite definiert wird.

2. Baugruppe nach Anspruch 1, wobei die beiden angrenzenden Bogensegmente (122, 124) Einkerbungen sind, die sich axial in den röhrenförmigen Körper bis zu den Endwänden (126, 128) erstrecken, die sich zwischen dem ersten Ende (120, 120B) und dem zweiten Ende (140, 140B) befinden.

3. Baugruppe nach Anspruch 1, wobei die beiden angrenzenden Bogensegmente Überstände (122C, 124C) sind, die sich axial aus dem röhrenförmigen Körper heraus bis zu den Endwänden (126C, 128C) über das erste Ende (120C, 120D) hinaus erstrecken.

4. Baugruppe nach dem Anspruch 2 oder 3, wobei sich mindestens ein Abschnitt (130B) einer Seitenwand (130) einer Einkerbung oder eines Überstandes über eine von einer radialen Ebene des Körpers mit einem Winkel (***α***) versetzte Ebene erstreckt.

5. Baugruppe nach einem der Ansprüche 1 bis 3, wobei das zweite Ende (140; 140B) des Ringes mindestens eine Einkerbung (142B; 142D) aufweist, die sich axial über einen Abschnitt des Körpers von dem zweiten Ende bis zu einer ersten Endwand (144B) erstreckt, wobei eine axiale Länge der Einkerbung durch einen zu kontrollierenden Mindestabstand zwischen dem zweiten Ende und einem axialen Bandende definiert wird, das auf dem Schaft der Befestigung angeordnet ist.

6. Baugruppe nach dem Anspruch 5, wobei das zweite Ende (140D) mindestens eine zweite Einkerbung (152D) aufweist, die sich axial über einen Abschnitt des Körpers von dem zweiten Ende bis zu einer zweiten Bodenwand erstreckt, wobei eine axiale Länge der Einkerbung durch einen Toleranzbereich eines zu kontrollierenden Abstands zwischen dem zweiten Ende und einem axialen Bandende definiert wird, das auf dem Schaft der Befestigung angeordnet ist.

7. Baugruppe nach Anspruch 5, wobei das zweite Ende (140; 140B) eine konische oder ebene Oberfläche ergänzend zu einer jeweils gefrästen oder vorstehenden Befestigungskopfunterseite umfasst.

8. Baugruppe nach einem der vorstehenden Ansprüche, wobei mindestens eine End- oder Seitenwand ein visuelles Mittel umfasst, das auf die Annahme oder die Ablehnung der überprüften Abmessung hinweist.

9. Baugruppe nach Anspruch 8, wobei das visuelle Mittel eine Farbe ist, die auf der Wand angebracht ist, oder ein Hinweis, der neben der Wand angebracht ist.

10. Kontrollverfahren einer Befestigung einer Baugruppe nach einem der vorstehenden Ansprüche, wobei das Verfahren die folgenden Schritte umfasst:
a- Montieren des Rings (100, 100B, 100C, 100D) mit einem Spiel auf dem zylindrischen Schaft der Befestigung,
b- Drehen lassen des Ringes auf dem Umfang des Schaftes, um einen ersten Rand eines Bandes (22) mit einer Seitenwand eines ersten Bogensegments des ersten Endes auszurichten,
c- Deklarieren der Umfangsbreite des Bandes (22) als konform, wenn ein zweiter Rand des Bandes (22) gegenüber dem ersten Rand des Bandes, in dem zweiten Bogensegment enthalten ist, und in dem ersten Bogensegment nicht enthalten ist, das heißt, wenn die Breite des Bandes größer als die Breite des ersten Bogensegments, und kleiner als die Breite der beiden angrenzenden Bogensegmente ist.

11. Kontrollverfahren nach Anspruch 10, darin bestehend, die Schritte b) und c) des Anspruchs 11 für jedes der Beschichtungsbänder der Befestigung zu wiederholen, und die Befestigung als nicht konform zu deklarieren, wenn der Schritt c) für mindestens ein Beschichtungsband (22) nicht überprüft wird.

12. Kontrollverfahren einer Befestigung einer Baugruppe nach einem der Ansprüche 5 bis 7, oder Anspruch 9, in Kombination mit dem Anspruch 5, oder Anspruch 6, wobei das Verfahren die folgenden Schritte umfasst:
e- Montieren des Rings (100B, 100D) mit einem Spiel auf dem zylindrischen Schaft der Befestigung,
f- Gleiten lassen des Ringes, um das zweite Ende (140B, 140D) auf Anschlag unter den Kopf (12) der Befestigung zu bringen,
g- Drehen lassen des Ringes über den gesamten Umfang des Schaftes,
h- Deklarieren der Befestigung als konform entsprechend einem Höchstlängenkriterium der Bänder, wenn beim Drehen des Ringes kein Band in der ersten Einkerbung (142B, 142D) aufscheint.

13. Kontrollverfahren einer Befestigung einer Baugruppe nach Anspruch 6 gemäß Anspruch 12, einen Schritt umfassend, der darin besteht, die Befestigung entsprechend einem Mindestlängenkriterium der Bänder als konform zu erklären, wenn das axiale Ende jedes Bandes gegenüber der zweiten Einkerbung (152D) aufscheint.

14. Kontrollverfahren nach Anspruch 12 oder Anspruch 13, wobei das zweite Ende (140B, 140D) des Ringes auf Anschlag unter einem Kopf der Befestigung platziert wird.

## Claims

1. Assembly, comprising a fixing device (10) and a check ring (100, 100B, 100C, 100D) for said fixing device (10), said fixing device comprising a broadened head (12) and a cylindrical barrel (14) extending along an axis (A), the barrel comprising at least one cladding band (22) parallel to the axis (A), the band (22) extending over a circumferential width of the barrel (14), the ring comprising a cylindrical tubular body (110, 110B, 110C, 110D) extending along an axis of revolution (B) between a first end (120, 120B, 120C, 120D) and a second end (140, 140B, 140C, 140D), **characterised in that**
- the first end (120, 120B, 120C, 120D) comprises two adjacent arc segments (122, 124; 122C, .124C), each arc segment having an end wall (126, 128; 126C, 128C) extending in a plane perpendicular to the axis of revolution (B) of the ring, the planes of the two walls being non-coincident and offset axially from the first end, and
- each arc segment comprises at least one lateral wall (130, 132, 134; 130C, 132C, 134C) extending in a radial plane passing through the axis of revolution (B) of the ring, and **in that**
- a width of an arc segment is defined by a minimum allowed bandwidth to be checked, and a total width of the two arc segments is defined by a maximum allowed bandwidth to be checked.

2. Assembly according to claim 1, wherein the two adjacent arc segments (122, 124) are recesses extending axially in the tubular body as far as the end walls (126, 128), situated between the first end (120, 120B) and the second end (140, 140B).

3. Assembly according to claim 1, wherein the two adjacent arc segments are projections (122C, 124C) extending axially out of the tubular body as far as the end walls (126C, 128C), beyond the first end (120C, 120D).

4. Assembly according to claim 2 or claim 3, wherein at least a portion (130B) of a lateral wall (130) of a recess or of a projection lies in a plane offset from a radial plane of the body with an angle (α).

5. Assembly according to any of claims 1 to 3, wherein the second end (140; 140B) of the ring has at least one recess (142B; 142D) extending axially over a portion of the body from said second end as far as a first end wall (144B), an axial width of the recess being defined by a minimum distance to be checked between said second end and an axial band end disposed on the barrel of the fixing device.

6. Assembly according to claim 5, wherein the second end (140D) has at least one second recess (152D) extending axially over a portion of the body from said second end as far as a second bottom wall, an axial length of said second recess being defined by a tolerance range of a distance to be checked between said second end and an axial band end disposed on the barrel of the fixing device.

7. Assembly according to claim 5, wherein the second end (140; 140B) comprises a complementary conical or planar surface of a bottom of a fixing head, respectively countersunk or protuberant.

8. Assembly according to any of the preceding claims, wherein at least one end or lateral wall comprises a visual means indicating the acceptance or rejection of the dimension being checked.

9. Assembly according to claim 8, wherein the visual means is a colour applied to said wall or a mention applied close to said wall.

10. Method for checking a fixing device of an assembly according to any of the preceding claims, the method comprising the following steps:
a - mounting the ring (100, 100B, 100C, 100D) with clearance on the cylindrical barrel of the fixing device,
b - rotating the ring on the circumference of the barrel so as to align a first edge of a band (22) with a lateral wall of a first arc segment of the first end,
c - declaring the circumferential width of the band (22) to be conforming if a second edge of the band (22), opposite to the first edge of said band, is included in the second arc segment and is not included in the first arc segment, that is to say if the width of said band is greater than the width of the first arc segment and less than the width of the two adjacent arc segments.

11. Checking method according to claim 10, consisting of repeating steps b) and c) of claim 11 for each of the cladding bands of the fixing device, and declaring the fixing device to be non-conforming if step c) is not verified for at least cladding band (22).

12. Method for checking a fixing device of an assembly according to any of claims 5 to 7 or claim 9 taken in combination with claim 5 or claim 6, the method comprising the following steps:
e) mounting the ring (100B, 100D) with clearance on the cylindrical barrel of the fixing device,
f) sliding the ring so as to put the second end (140B, 140D) in abutment under the head (12) of the fixing device,
g) rotating the ring over the entire circumference of the barrel,
h) declaring the fixing device to be in conformity in accordance with a criterion of maximum length of the bands if no band appears in the first recess (142B, 142D) when the ring is rotated.

13. Method for checking a fixing device of an assembly according to claim 6 or according to claim 12, comprising a step consisting of declaring the fixing to be in conformity in accordance with a criterion of minimum length of the bands if the axial end of each band appears opposite the second recess (152D).

14. Method for checking according to claim 12 or claim 13, wherein the second end (140B, 140D) of the ring is placed in abutment under a head of the fixing device.
